# EUROPEAN PATENT APPLICATION

(11) **EP 1 793 579 A2**
(43) Date of publication of application: **06.06.2007**
(21) Application number: 06018276.3
(22) Date of filing: 31.08.2006
(51) Int. Cl.: H04N 1/04

(54) **Image forming device**

(30) Priority: 04.10.2005 JP 2005291746
(71) Applicant: MURATA KIKAI KABUSHIKI KAISHA, Kyoto (JP)
(72) Inventor: Shojo, Yoshihiro c/o Murata Machinery, Ltd., Kyoto 612-8686 (JP); Kinoshita, Minoru c/o Murata Machinery, Ltd., Kyoto 612-8686 (JP)
(74) Representative: Kirschner, Klaus Dieter

(57) **Abstract**

An image forming device includes a document table for placing a subject whose image is to be acquired, an image acquiring unit fixed at a position above the document table for acquiring an image of the subject from above; a display unit for displaying the acquired image data; an image forming unit for forming an image of the acquired image data in an image forming medium; and a control unit. The control unit controls the image acquiring unit to acquire image data of the subject, processes the acquired image data to cause the display unit to display the same, and processes the acquired image data to cause the image forming unit to perform an image forming operation.

## Description

The present invention relates to an image forming device such as a copying machine, a printer, and a facsimile device.

An image forming device has a function for performing a printing operation on a recording medium on the basis of image data or the like. The image forming device has other various functions added thereto, and is now in the course of evolution to a multi function device. For example, a multi function peripheral having a scanner function or a function for storing document data in addition to a copying function, a printing function, and a facsimile function is developed.

As a prior art of the multi function peripheral, for example, a color image processing device in which a digital camera is used as a scanner is exemplified. As another prior art thereof, there is an image forming device which acquires an image of a surface of an original set on an original platen by a preview camera and displays a position of the surface of the original placed on the original platen on a display device from a reading direction.

As still another prior art, a scanner for books which acquires an image of a book placed on the original platen from above by the digital camera is also exemplified.

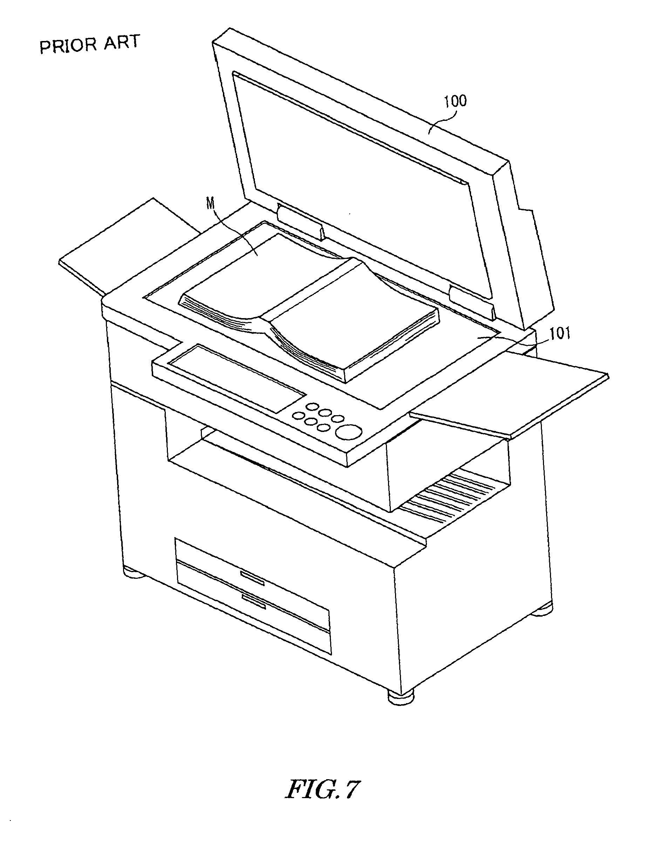

In the conventional multi function peripherals, for example, a document reading unit is generally located above an image forming unit. As shown in Fig. 7, an original pressing cover 100 is opened, and an original M is placed on an upper surface of a platen glass 101 of a flat bed type. A lower surface of the original M is read by moving a reading head to scan under the platen glass 101. In the case of an original having a plurality of sheets bound as a book, a page to be read has to be opened and brought into tight contact with the platen glass 101 with the face down.

Therefore, in the case of reading the original such as a book, the following operation has been performed repeatedly. The page of the original to be read is opened and then reversed. The original is brought into tight contact with the platen glass, and read. After the completion of reading operation, the original is moved upward and reversed, then the page is turned over and reversed again. Such a series of operations have to be performed repeatedly, which is very troublesome.

Therefore, in the prior art described above, the book is placed on the original platen in the opened state, and the image thereof is acquired from above to read the original. Accordingly, it is not necessary to reverse the book every time, and hence the operability is improved.

However, when the image of the original is acquired by the digital camera or the like from above, the acquired image data is input once to a computer such as a personal computer. After having processed the image data in this computer, the processed image data is transmitted to the image forming device. Then, in the image forming device, the image forming process for the image data is performed. Therefore, a user needs to operate a plurality of devices. The user confirms the acquired image data on a display of the computer, and then performs an operation for setting again on the image forming device. This not only makes the operation complex, but also makes difficult to perform a sufficient adjustment.

Accordingly, it is an object of the invention to operate a series of operations to record image data acquired by an image acquiring unit on an image forming medium with an image forming unit briefly.

An image forming device of the invention includes a document table, an image acquiring unit, a display unit, an image forming unit, and a control unit for controlling these members. A subject for acquiring an image is placed on the document table. The image acquiring unit is located above the document table and fixed thereto and acquires an image of the subject from above. The display unit displays the acquired image data. The image forming unit forms the acquired image data on the image forming medium. The control unit includes an image acquiring control unit, a display control unit, and an image forming control unit. The image acquiring control unit controls the image acquiring unit and acquires the image data of the subject. The display control unit processes the acquired image data and displays the same on the display unit. The image forming control unit processes the acquired image data and causes the image forming unit to perform an image forming operation.

Preferably, the image acquiring unit is fixed to an original document holding cover provided on a main body. The original document holding cover is provided so as to be openable and closable. The image acquiring unit is set to an image acquiring position in a state in which the original document holding cover is pivoted upward.

Preferably, the document table is arranged on an upper surface of the original document holding cover. The original document holding cover is provided above the main body so as to be openable and closable. The image acquiring unit is fixed to a supporting member erected from the main body.

The image acquiring unit is fixed to the main body so as to be mountable and demountable.

According to the invention, the image data acquired by the image acquiring unit is displayed on the display unit for being confirmed by a user, and a series of operations of the image forming unit for recording the image data on a recording medium is controlled only by the control unit of the image forming device. The user can set the series of operations only by the operation of an operation unit of the image forming device. Therefore, the operation by the user is simplified. The user can perform the setting of the image acquiring unit and the image forming unit while confirming the display on the display unit. The image data can be fine-adjusted and can be recorded on the recording medium. In addition, since the image acquiring unit is integrated with the image forming device, the device such as a personal computer is not necessary, and hence the space saving is achieved.

The image acquiring unit is fixed to the original document holding cover provided so as to be openable and closable in an upper part of the main body. The image acquiring unit is set to the image acquiring position in a state in which the original document holding cover is pivoted upward. Therefore, the original document holding cover can be commonly used as a supporting member for the image forming device in the prior art. A stable position setting is also enabled.

The document table is arranged on the upper surface of the original document holding cover provided in the upper part of the main body so as to be openable and closable. The image acquiring unit is fixed to the supporting member erected from the main body. Therefore, the image acquiring operation by the image acquiring unit can be performed together with the original reading operation in the prior art. The operability of the multi function image forming device is improved.

Since the image acquiring unit is fixed to the main body so as to be mountable and demountable, the image acquiring unit can be demounted and used independently. The image data acquired by the demounted image acquiring unit can be recorded by the image forming unit on the recording medium by mounting the image acquiring unit to the image forming device.

Other features, elements, processes, steps, characteristics and advantages of the invention will become more apparent from the following detailed description of preferred embodiments of the invention with reference to the attached drawings.

Embodiments of the invention are now described with reference to the drawings.
Fig. 1 is a schematic cross-sectional view of an entire image forming device according to an embodiment of the invention;
Fig. 2 is an appearance perspective view of the embodiment;
Fig. 3 is a block diagram of the embodiment;
Fig. 4 is an appearance perspective view of a modification of the embodiment;
Fig. 5 is a partly enlarged perspective view showing a state in which a digital camera is demounted;
Fig. 6 is an appearance perspective view showing another embodiment of the invention; and
Fig. 7 is an appearance perspective view of a prior art.

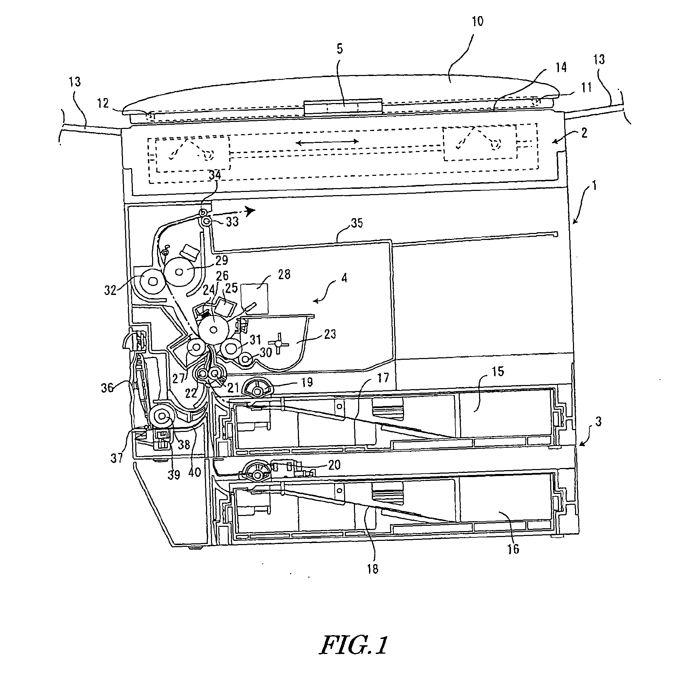

Fig. 1 is a schematic cross-sectional view showing an entire image forming device according to the invention. An original document reading unit 2 is arranged on an upper portion of an image forming device 1. Under the original document reading unit 2, a paper feeding unit 3, an image forming unit 4 are arranged from a bottom surface thereof.

The original document reading unit 2 includes a flat bed platen 14. An original document holding cover 10 is mounted to an upper surface of the flat bed platen 14 so as to be openable and closable in the vertical direction. Rollers 11 and 12 for rotating a belt for feeding the original document are provided in the interior of the original document holding cover 10. An image acquiring unit 5 is provided at a center on the near side of the original document holding cover 10.

Then when reading the sheet-type original document, the original document holding cover 10 is opened upward. The original document is set on the upper surface of the flat bed platen 14 in a state in which a read surface of the original document is faced downward, and the original document holding cover 10 is closed. Then, a reading head (shown by a broken line) provided under the flat bed platen 14 is moved to scan, so that the original document is read.

When there are a plurality of sheet-type original documents, the original documents are set to an original document tray 13 in a state in which the original document holding cover 10 is closed. When the rollers 11 and 12 for feeding the original documents are rotated, the belt for feeding the original documents carries the original document to the upper surface of the flat bed platen 14 one by one. Then, the reading head reads the original document. The read original documents are discharged to the original document tray 13. The original document carrying and reading operation is repeated. Consequently, the plurality of original documents are read in sequence automatically.

In the paper feeding unit 3, a paper feeding cassettes 15 and 16 are arranged in the vertical direction in two stages. A plurality of sheets of predetermined sizes are loaded on flappers 17 and 18 of the paper feeding cassettes 15 and 16. The flappers 17 and 18 are supported so that right ends in the drawing can be pivoted via hinges. Pickup rollers 19 and 20 are provided on the left sides of the paper feeding cassettes 15 and 16. Since the flappers 17 and 18 are pushed upward, upper surfaces of the loaded sheets make contact with the pickup rollers 19 and 20. When the pickup rollers 19 or 20 are driven to rotate in this state, the sheets are fed to a paper transporting path one by one by a friction force.

A feed roller 21 and a press roller 22 carry fed sheets to the image forming unit 4. In the image forming unit 4, the image is formed on the carried sheet. The image forming unit 4 includes a toner chamber 23, a memory removing brush 24, a charger 25, a photoconductive drum 26, a transfer roller 27, an exposure head 28 and a fixing roller 29. A surface of the photoconductive drum 26 is uniformly charged using the charger 25. The charged photoconductive drum 26 is exposed by the exposure head 28 according to the image data signals, so that an electro latent image is formed. Subsequently, the toner in the toner chamber 23 is transferred from a supply roller 30 to the electro latent image formed on the photoconductive drum 26 via a developing roller 31, so that the electro latent image is converted into a toner image. The transfer roller 27 transfers the toner image formed on the surface of the photoconductive drum 26 to the sheet. Then, the transferred toner image is nipped between the fixing roller 29 and a press roller 32, heated and pressed and fixed on the sheet. The sheet on which the image is fixed is nipped between a discharge roller 33 and a press roller 34 and is outputted to a paper output tray 35.

On the other hand, a manual paper feed tray 36 is provided on a side of the image forming device 1. In Fig. 1, the manual paper feed tray 36 is locked by a lock member, not shown to the main body, and is in the closed position. The manual paper feed tray 36 is supported by a shaft 37, and pivots to the opened position. A pick up roller 38 and a pad 39 which is in press-contact thereto are provided under the manual paper feed tray 36 for carrying the manually fed sheets. When the pick up roller 38 is rotated, the manually fed sheets are fed. The fed sheets are carried along a guide 40 into a nip between the feed roller 21 and the press roller 22.

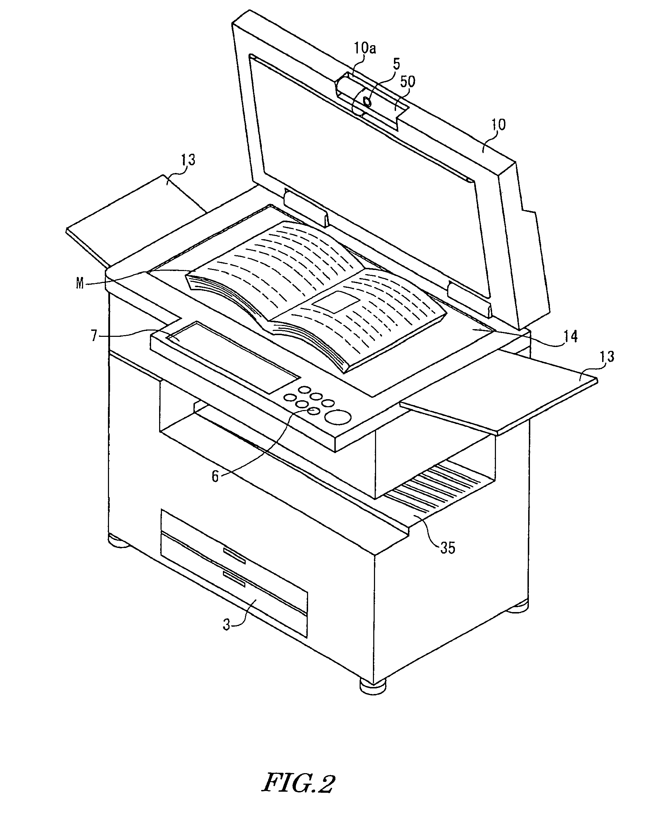

Fig. 2 is an appearance perspective view for explaining the operation to read the original document which includes a plurality of sheets bound together like a book. The original document holding cover 10 is opened upward, and an original document M is set on the upper surface of the flat bed platen 14 in a state in which the page to be read is opened and faced upward. Then the pivoting position of the original document holding cover 10 upward is adjusted and an image acquiring position is set so that the image acquiring unit 5 is located to an exactly above a center position of the original document M.

The image acquiring unit 5 is provided with optical members such as lenses, or an image pickup element such as a CCD. The image acquiring unit 5 is the one similar to a compact camera in the prior art. The image acquiring unit 5 is fixed to a column-shaped supporting member 50. Both ends of the supporting member 50 are supported in a stepped portion 10a of the original document holding cover 10 and is rotatable. Therefore, by rotating the supporting member 50 as needed, the image acquiring direction of the image acquiring unit 5 can be rotated. The image acquiring direction of the image acquiring unit 5 is adjusted so that an upper surface of the original document M falls within the image acquiring range.

A display unit 7 is provided on the near side of the original document reading unit 2. The display unit 7 includes an operation unit 6 having numerical keys arranged thereon and a liquid crystal panel. Information required for operation or setting of the device as well as the image data acquired by the image acquiring unit 5 is displayed on the display unit 7. A user can check the image acquiring direction or the image quality of the image acquiring unit 5 while viewing the image data displayed on the display unit 7 to adjust as needed. The display unit 7 can also be used commonly with the operation unit as a touch panel.

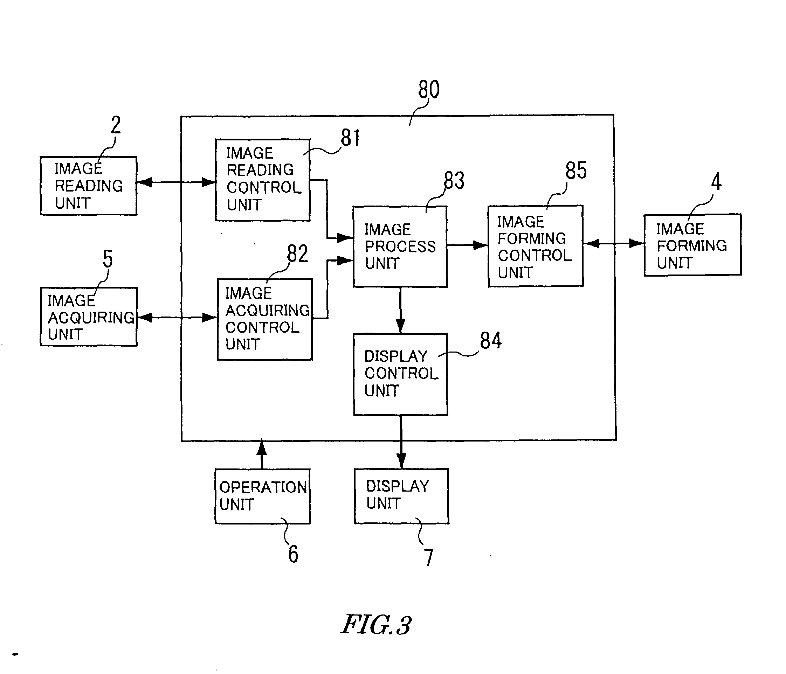

Fig. 3 is a block diagram of this embodiment. A control unit 80 is provided with a CPU or the like for controlling the entire device. The control unit 80 includes an image reading control unit 81 and an image acquiring control unit 82. The image reading control unit 81 controls the original document reading unit 2. The image acquiring control unit 82 controls the image acquiring unit 5. The control units 81, 82 control the original document reading unit 2 or the image acquiring unit 5 so as to acquire the image data on the basis of an operation information supplied from the operation unit 6. The acquired image data is processed by an image processing unit 83. Processed image data is outputted to an image forming control unit 85. In the image forming unit 4, the image is formed in the image forming medium.

On the other hand, the image data processed in the image processing unit 83 is outputted to a display control unit 84 as well, and is displayed on the display unit 7. It is also possible that the user checks the image displayed on the display unit 7 and re-acquires the image again. The user can also operate the operation unit 6 to adjust the image quality. When the user checks the image and then presses a start key on the operation unit 6, image data is outputted from the image processing unit 83 to the image forming control unit 85. The image forming unit 4 forms the image data.

As described above, a series of operations including the image acquisition by the image acquiring unit 5, the check of the image data on the display unit 7, the formation of the image in the image forming unit 4 can be performed smoothly. Therefore, the operability is improved, and printing out of the image desired by the user is ensured.

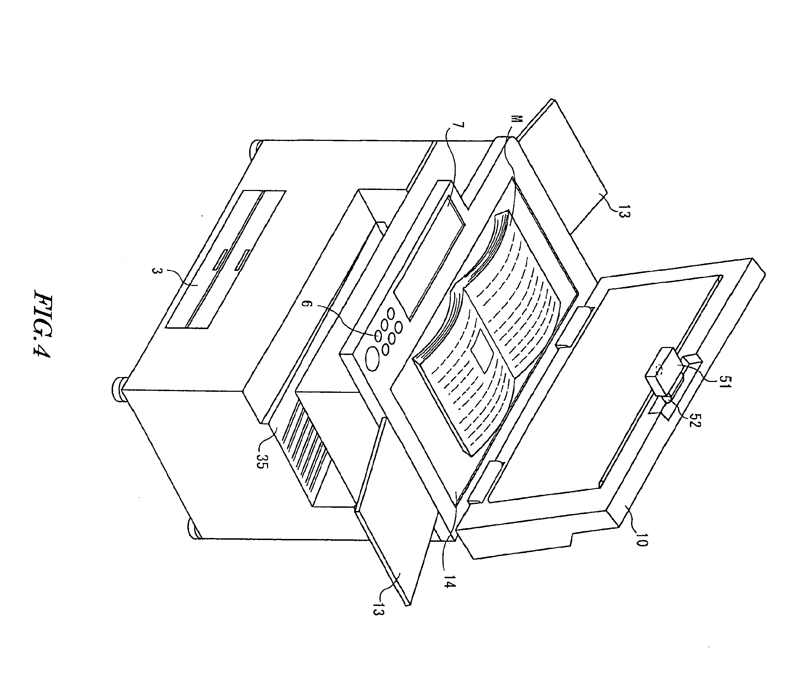

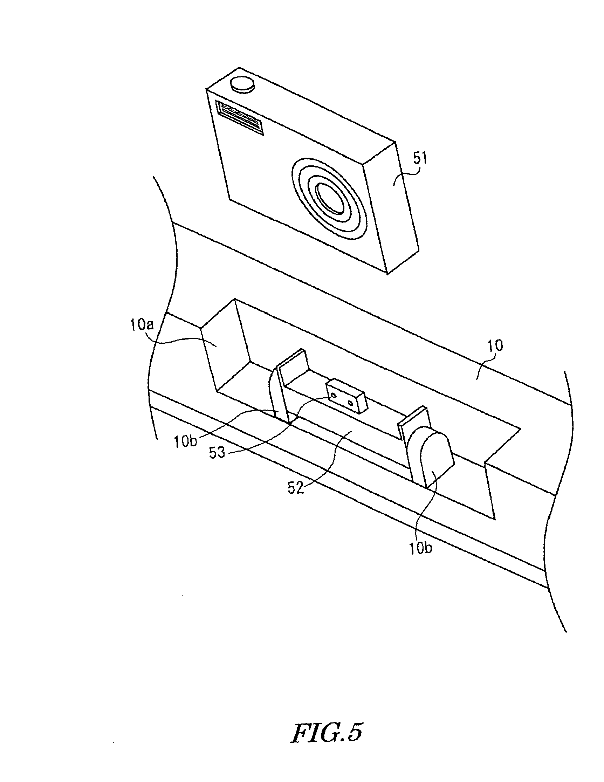

Fig. 4 is an appearance perspective view of a modification of the embodiment described above. In this example, a digital camera 51 which is mountable and demountable with respect to the main body is mounted as the image acquiring unit 5 fixed to the original document holding cover 10. Fig. 5 is a partly enlarged perspective view showing a state in which the digital camera 51 is demounted. A pair of members for supporting a shaft 10b are erected from the stepped portion 10a of the original document holding cover 10. A supporting member 52 is rotatably supported between the members 10b. The supporting member 52 can be stopped at a desired pivot position by, for example, a free-stop hinge. Guide portions are formed on both sides of the supporting member 52. A connection terminal 53 for connecting the digital camera 51 is provided at a center portion of the supporting member 52. A connection terminal, not shown, is also provided on a bottom surface of the digital camera 51. When the connection terminal, not shown, is connected to the connection terminal 53, sending or receiving of the information such as command signals from the main body or the acquired image data can be achieved between the main body and the digital camera 51.

When acquiring an image, the original document holding cover 10 is opened upward as shown in Fig. 4. The original document is set on the upper surface of the flat bet platen 14 with the face oriented upward in the state in which the page to be read of the original document M is opened. Then, the upward pivot position of the image holding cover 10 is adjusted and the image acquiring position is set so that the digital camera 51 is located exactly above the center position of the original document M. Subsequently, the digital camera 51 is rotated and the image acquiring direction is adjusted. The digital camera 51 acquires an image of the upper surface of the original document M. The acquired image data is displayed on the display unit 7. The user confirms whether or not the original document M falls within the image acquiring range, and re-acquires the image when needed. The user performs the image adjustment or the like as needed. The adjusted image data is formed into an image on the sheet by the image forming unit.

The digital camera 51 is demountable, and can be used for image acquisition independently. The image forming device can form an image of the image data acquired by the demounted digital camera 51.

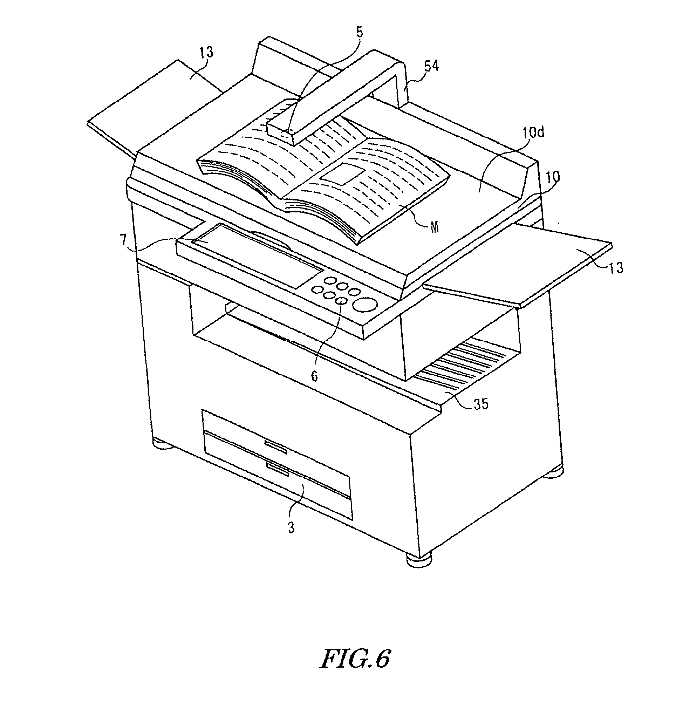

Fig. 6 is an appearance perspective view of another embodiment of the invention. In this example, an upper surface of the original document holding cover 10 is used as a document table for the original document M. Therefore, a flat placing space 10d is formed on the upper surface of the original document holding cover 10. The image acquiring unit 5 is fixed to a supporting bar 54 erected at a substantially center of the far side of the original document holding cover 10. The supporting bar 54 is formed into an inverted L-shape. The supporting bar 54 is fixed at a proximal portion thereof to the far side of the original document holding cover 10, and extends substantially in the horizontal direction on the near side. The image acquiring unit 5 is fixed to the lower side of a distal portion of the supporting bar 54. The image acquiring direction of the image acquiring unit 5 is faced toward the placing space 10d.

The original document M is set so as to fall within the image acquiring range of the image acquiring unit 5, and the image is acquired. In the same manner as the embodiment described in conjunction with Fig. 2, the acquired image data is displayed on the display unit 7. The user confirms the image data, and performs adjustment of the image quality of the data. The image forming unit 4 records the adjusted image data on the recording medium.

In this example, the image is acquired in a state in which the original document holding cover 10 is closed. Therefore, the reading operation and the image acquiring operation of the original document can be performed in parallel. Therefore, the convenience is further improved.

It is also possible to mount an automatic page turn-over device on the original document holding cover 10 as needed. For example, by turning over the pages of the original document M by adsorbing the same with electric charge or the like, the images can be acquired automatically on the page-to-page basis.

In the examples described above, the acquired image data is formed into an image in the image forming unit. Alternatively, it is also possible to store and accumulate the image data in a memory unit so that the image forming device of the invention can be used as a data library system.

## Claims

1. An image forming device comprising:
a document table (14) for placing a subject (M) whose image is to be acquired;
an image acquiring unit (5) fixed at a position above the document table (14) for acquiring an image of the subject from above;
a display unit (7) for displaying the acquired image data;
an image forming unit (4) for forming an image of the acquired image data on a recording medium; and
an image acquiring control unit (82) for controlling the image acquiring unit (5) and acquiring the image data of the subject (M); and
an image forming control unit (85) for processing the acquired image data and causing the image forming unit (4) to perform an image forming operation
**characterized in that**, a display control unit (84) for processing the acquired image data and displaying the same on the display unit (7) is further provided.

2. The image forming device according to Claim 1,
wherein the image acquiring unit (5) is fixed to an original document holding cover (10) provided on an upper portion of a main body (1) so as to be openable and closable and sets the image acquiring unit (5) to an image acquiring position in a state in which the original document holding cover (10) is pivoted upward.

3. The image forming device according to Claim 1,
wherein the document table (14) is arranged on an upper surface of an original document holding cover (10) provided above a main body (1) so as to be openable and closable, and the image acquiring unit (5) is fixed to a supporting member (54) erected from the main body (1).

4. The image forming device according to any one of Claims 1 to 3, wherein the image acquiring unit (5) is mountable and demountable.
